# EUROPÄISCHE PATENTANMELDUNG

(11) **EP 4 755 712 A1**
(43) Veröffentlichungstag der Anmeldung: **10.06.2026**
(21) Anmeldenummer: 25215882.9
(22) Anmeldetag: 14.11.2025
(51) Int. Cl.: B60N 2/80

(54) **SITZVORRICHTUNG FÜR EIN KRAFTFAHRZEUG**

(30) Priorität: 04.12.2024 DE 102024211613
(71) Anmelder: Stellantis Auto SAS, 78300 Poissy (FR)
(72) Erfinder: KUHLEY, Christian, 65428 Rüsselsheim am Main (DE); WALSER, Mayeul, 75020 Paris (FR); LEMELE, Clement, 92370 Chaville (FR)
(74) Vertreter: BCIP

(57) **Zusammenfassung**

Die Erfindung betrifft eine Sitzvorrichtung (2) für ein Kraftfahrzeug mit einer Sitzrückenlehne (4), an der ein Benutzer mit seinem Rücken anliegend anordenbar ist und mit mindestens einer Kopfstütze (6), an der der Nutzer mit seinem Kopf an einer Kopfstützfläche (8) anliegend anordenbar ist, die mindestens ein Stützmittel (10), das im Wesentlichen in einem mittigen Zentralbereich der Kopfstütze (6) angeordnet ist, durch das auf die Kopfstützfläche (8) wirkende Lasten aufnehmbar sind und das lastübertragend an oder in der Sitzrückenlehne (4) festgelegt ist, die mindestens ein lastaufnehmendes Rahmenmittel (12), das in Gänze oder zumindest abschnittsweise einen äußeren Randbereich der Kopfstütze (6) bildet, das den mittigen Zentralbereich in Gänze oder abschnittsweise umgibt, durch das auf die Kopfstützfläche (8) wirkende Lasten aufnehmbar sind und das lastübertragend an oder in der Sitzrückenlehne (4) festgelegt ist, und die mindestens einen quer oder schräg zur Kopfstützfläche (8) erstreckten, durchgehenden, materialfreien Freiraum (14) umfasst, durch den Stützmittel (10) und Rahmenmittel (12) in einer parallel oder schräg zur Kopfstützfläche (8) verlaufenden Ebene berührungsfrei zueinander beabstandet sind.

## Beschreibung

Die Erfindung betrifft eine Sitzvorrichtung für ein Kraftfahrzeug.

Sitzvorrichtungen für Kraftfahrzeuge sind aus dem Stand der Technik in unterschiedlichen Bauformen bekannt. Bei Kraftfahrzeugen umfassen diese meist eine Sitzrückenlehne, an der ein Benutzer mit seinem Rücken liegend, anordenbar ist und eine Kopfstütze, die an der Sitzrückenlehne befestigt ist. Hierbei können Sitzrückenlehne und Kopfstütze ein gemeinsames, einstückiges Bauteil bilden oder die Kopfstütze als separates Bauteil relativ zur Sitzrückenlehne in unterschiedlichen Positionen verstellbar sein.

Die Kopfstütze ist derart auszulegen, dass diese bei einem Aufprall auf das Kraftfahrzeug die durch einen Kopf eines Nutzers aufzufangenden Kräfte, crashsicher aufnehmen und an die Sitzrückenlehne weiterleiten kann.

Bekannte Sitzvorrichtungen umfassen an ihren Kopfstützen meist ein Stützmittel, das im Wesentlichen in einem mittigen Zentralbereich der Kopfstütze angeordnet ist. Um Kräfte auch von außermittigen Bereichen der Kopfstütze aufnehmen zu können, sind die bekannten Kopfstützen der Sitzvorrichtungen mit Tragstrukturen versehen, durch die auf außermittig angeordnete Bereiche der Kopfstütze an das im Zentralbereich der Kopfstütze angeordnete Stützmittel übertragbar sind. Hierdurch sind die aus dem Stand der Technik bekannten Kopfstützen schwer und robust ausgebildet.

Eine Aufgabe eines Ausführungsbeispiels der Erfindung ist, eine Sitzvorrichtung für ein Kraftfahrzeug vorzuschlagen, die bei Einhaltung der gesetzlichen Vorschriften für Aufprallbedingungen gewichtsreduziert ausbildbar ist.

Diese Aufgabe wird gelöst durch eine Sitzvorrichtung für ein Kraftfahrzeug mit einer Sitzrückenlehne, an der ein Benutzer mit seinem Rücken anliegend anordenbar ist und mit mindestens einer Kopfstütze, an der der Nutzer mit seinem Kopf an einer Kopfstützfläche anliegend anordenbar ist, die mindestens ein Stützmittel, das im Wesentlichen in einem mittigen Zentralbereich der Kopfstütze angeordnet ist, durch das auf die Kopfstützfläche wirkende Lasten aufnehmbar sind und das lastübertragend an oder in der Sitzrückenlehne festgelegt ist, die mindestens ein lastaufnehmendes Rahmenmittel, das in Gänze oder zumindest abschnittsweise einen äußeren Randbereich der Kopfstütze bildet, das den mittigen Zentralbereich in Gänze oder abschnittsweise umgibt, durch das auf die Kopfstützfläche wirkende Lasten aufnehmbar sind und das lastübertragend an oder in der Sitzrückenlehne festgelegt ist, und die mindestens einen quer oder schräg zur Kopfstützfläche erstreckten, durchgehenden, materialfreien Freiraum umfasst, durch den Stützmittel und Rahmenmittel in einer parallel oder schräg zur Kopfstützfläche verlaufenden Ebene berührungsfrei zueinander beabstandet sind.

Dadurch, dass die Sitzvorrichtung eine Kopfstütze umfasst, bei der ein Stützmittel im Wesentlichen in einem mittigen Zentralbereich der Kopfstütze angeordnet ist und ein Rahmenmittel umfasst, das in Gänze oder zumindest abschnittsweise einen äußeren Randbereich der Kopfstütze bildet, sind zwei lastaufnehmende Strukturen gebildet, die bei einem Aufprall Lasten aufnehmen und an die Sitzrückenlehne übertragen können. Hierdurch ist es bei Beibehalten eines aufprallsicheren Verhaltens ermöglicht, zwischen Rahmenmittel und Stützmittel einen materialfreien Freiraum vorzusehen, wodurch die Kopfstütze materialreduziert und gewichtsreduziert ausbildbar ist. Insbesondere dadurch, dass das Rahmenmittel an den Randbereich der Kopfstütze angeordnet ist, sind Drehmomente, die auf das Rahmenmittel und/oder das Stützmittel wirken, reduziert, wodurch auf lastaufnehmende Zwischenstrukturen verzichtet werden kann.

Bei einer Ausführungsform der Sitzvorrichtung ist vorgesehen, dass das Rahmenmittel in einer parallel oder schräg zur Kopfstützfläche verlaufenden Ebene einen V- oder U-förmigen Querschnitt umfasst, der in Richtung Sitzrückenlehne hin geöffnet ist und der das Stützmittel seitlich und auf der der Sitzrückenlehne abgewandten Seite umgibt, wobei das Rahmenmittel mit den beiden freien Enden in Richtung Sitzrückenlehne erstreckt an oder in der Sitzrückenlehne festgelegt ist.

Dadurch, dass das Rahmenmittel einen U-förmigen Querschnitt umfassen kann, der in Richtung Sitzrückenlehne hin geöffnet ist und das Stützmittel seitlich und auf der der Sitzrückenlehne abgewandten Seite umgibt, bildet das Rahmenmittel zumindest dort den äußeren Randbereich der Kopfstütze, der nicht der Sitzrückenlehne zugewandt ist. Hierdurch wird gewährleistet, dass durch Kopfstütze und Sitzrückenlehne stets ausreichende lastaufnehmende Struktur zur Verfügung gestellt wird, die im Falle eines Aufpralls Kräfte aufnehmen kann.

Das Rahmenmittel kann solchenfalls beispielsweise ein U-Profil umfassen, das mit seinen beiden freien Enden in oder an der Sitzrückenlehne festlegbar ist. Ein Einsparen von Material und Gewicht lässt sich maximieren, wenn der mindestens eine materialfreie Freiraum einen einzigen materialfreien Freiraum umfasst, der Stützmittel und Rahmenmittel in Gänze berührungsfrei voneinander beabstandet.

Solchenfalls ist der materialfreie Freiraum zumindest dort umlaufend erstreckt, wo das Stützmittel nicht der Sitzrückenlehne hin zugewandt ist.

Bei einer bezüglich der vorigen Ausführungsform alternativen Ausführungsform erweist es sich als vorteilhaft, wenn der mindestens eine materialfreie Freiraum mindestens zwei materialfreie Freiräume umfasst, die jeweils Stützmittel und Rahmenmittel berührungsfrei voneinander beabstanden, und wenn die Kopfstütze mindestens ein Stegelement umfasst, das zwischen Stützmittel und Rahmenmittel erstreckt ist, das an Stützmittel und am Rahmenmittel festgelegt ist und durch das zwei benachbarte Freiräume voneinander getrennt beabstandet sind.

Durch das Vorsehen mehrerer materialfreier Freiräume lässt sich im Vergleich zum Stand der Technik das Gewicht der Kopfstütze reduzieren. Durch das Vorsehen von Stegelementen, können zusätzliche lastaufnehmende Strukturen gebildet sein, die das Rahmenmittel mit dem Stützmittel verbinden. Ferner ist es auch denkbar, dass das mindestens eine Stegelement lediglich kaschierend vorgesehen ist und nicht für die Aufnahme von Lasten vorgesehen ist.

Grundsätzlich ist es denkbar, dass das Stützmittel genau durch den Masseschwerpunkt der Kopfstütze verläuft. Bei einer Ausführungsform der Sitzvorrichtung erweist es sich als vorteilhaft, wenn das Stützmittel mindestens ein Stützelement umfasst, das in einer parallel oder schräg zur Kopfstützfläche verlaufenden Ebene einen V- oder U-förmigen Querschnitt umfasst, der in Richtung Sitzrückenlehne hin geöffnet ist und der mit den beiden freien Enden in Richtung Sitzrückenlehne erstreckt an oder in der Sitzrückenlehne festgelegt ist.

Hierdurch ist es ermöglicht, das Stützmittel in der parallel oder schräg zur Kopfstützfläche verlaufenden Ebene verteilt und gleichzeitig gewichtsreduziert auszubilden.

Bei einer Weiterbildung letztgenannter Ausführungsform ist vorgesehen, dass das Stützmittel mindestens ein Stützelement umfasst, das in einer parallel oder schräg zur Kopfstützfläche verlaufenden Ebene einen V- oder U-förmigen Querschnitt umfasst, der in Richtung Sitzrückenlehne hin geöffnet ist und der mit den beiden freien Enden in Richtung Sitzrückenlehne erstreckt an oder in der Sitzrückenlehne festgelegt ist.

Hierdurch umläuft das V- oder U-förmige Stützelement beispielsweise den Mittelpunkt der Kopfstütze und umgibt hierdurch die Ausnehmung. Hierdurch kann das Gewicht der Kopfstütze und hierdurch der Sitzvorrichtung weiter reduziert sein.

Darüber hinaus erweist es sich als vorteilhaft, wenn das Stützmittel eine flächenhafte Stützplatte umfasst, die auf der der Kopfstützfläche zugewandten Seite des mindestens einen Stützelements am mindestens einen Stützelement festgelegt ist und dass die Ausnehmung überdeckt und/oder wenn das mindestens eine Stützelement in der parallel oder schräg zur Kopfstützfläche verlaufenden Ebene seitlich, insbesondere in Richtung Rahmenmittel überragt.

Hierdurch ist es ermöglicht, das Stützelement gewichtsreduziert auszubilden und über das Vorsehen der flächenhaften Stützplatte Kräfte aufzunehmen und auf das Stützelement zu übertragen.

Es sind Ausführungsformen der Sitzvorrichtung denkbar, bei denen die Kopfstütze an der Sitzrückenlehne starr und lösbar, insbesondere kraft- oder formschlüssig, oder starr und unlösbar, insbesondere kraft-, stoff- oder formschlüssig, festgelegt ist und/oder dass die Kopfstütze an der Sitzrückenlehne verstellbar und lösbar, insbesondere kraft- oder formschlüssig, festgelegt ist.

Wenn die Kopfstütze an der Sitzrückenlehne starr und lösbar, insbesondere kraft- oder formschlüssig, festgelegt ist, kann die Kopfstütze beispielsweise an der Sitzrückenlehne verschraubt oder verclipst sein. Unter "starr" wird hierbei verstanden, dass durch einen Nutzer des Kraftfahrzeugs die Kopfstütze nicht bezüglich der Sitzrückenlehne manuell verstellt werden kann.

Wenn die Kopfstütze an der Sitzrückenlehne starr und unlösbar, insbesondere kraft-, stoff- oder formschlüssig, festgelegt ist, kann die Kopfstütze mit der Sitzrückenlehne verklebt, verschweißt oder verlötet sein. Darüber hinaus sind Ausführungsformen denkbar, bei denen das Rahmenmittel und/oder das Stützmittel der Kopfstütze und die Sitzrückenlehne, insbesondere deren tragenden und lastübernehmenden Strukturen, gemeinsame einstückige Bauteile bilden. Solchenfalls ist es beispielsweise denkbar, dass eine lastaufnehmende Struktur der Sitzrückenlehne sich bis in die Kopfstütze erstreckt und dort das Rahmenmittel oder das Stützmittel bildet.

Wenn die Kopfstütze an der Sitzrückenlehne verstellbar und lösbar, insbesondere kraft- oder formschlüssig, festgelegt ist, kann die Kopfstütze ohne Weiteres in verschiedene Positionen bezüglich der Sitzrückenlehne durch einen Nutzer der Sitzvorrichtung verstellt werden. Hierdurch ist die Sitzvorrichtung an Nutzer unterschiedlicher Körpergröße anpassbar.

Grundsätzlich ist es denkbar, dass die Kopfstütze der Sitzvorrichtung ausschließlich durch Rahmenmittel und Stützmittel gebildet ist. Hierdurch ist eine offene Struktur der Kopfstütze gegeben. Darüber hinaus kann bei einer Ausführungsform der Sitzvorrichtung mindestens ein Abdeckmittel vorgesehen sein, das zumindest auf einer der Kopfstützfläche zugewandten Seite von Stützmittel und Rahmenmittel angeordnet und insbesondere an Stützmittel und Rahmenmittel berührend anliegend festgelegt ist, und das zumindest die Kopfstützfläche der in Gänze oder zumindest abschnittweise überdeckt oder bildet.

Das Abdeckmittel kann in Gänze die Kopfstützfläche bilden. Das Abdeckmittel kann ausschließlich auf der die Kopfstützfläche bildenden Seite der Kopfstütze ausgebildet sein oder in Gänze eine Außenhaut der Kopfstütze bilden. Solchenfalls umgibt das Abdeckmittel die Kopfstütze zumindest nahezu in Gänze, sowohl auf der die Kopfstützfläche bildenden Seite als auch auf der der Kopfstützfläche abgewandten Seite der Kopfstütze.

Das Abdeckmittel kann grundsätzlich beliebig ausgebildet sein. Bei Ausführungsformen der Sitzvorrichtung ist vorgesehen, dass das Abdeckmittel eine geschlossene Oberfläche oder offene Oberflächenstruktur umfasst und/oder dass das Abdeckmittel ein Gewebe, einen Kunststoff, Leder oder einen Netzstoff umfasst.

Wenn das Abdeckmittel eine geschlossene Oberfläche umfasst, können Rahmenmittel und Stützmittel optisch kaschiert werden. Wenn das Abdeckmittel eine offene Oberflächenstruktur umfasst, kann eine transparente optische Anmutung erzeugt werden.

Die offene Oberflächenstruktur kann beispielsweise eine Netzstruktur umfassen.

Das Abdeckmittel kann beispielsweise ein Gewebe, einen Netzstoff, ein Leder oder Dergleichen, umfassen.

Darüber hinaus ist es denkbar, dass das Abdeckmittel einen Kunststoff umfasst.

Bei einer Ausführungsform der Sitzvorrichtung sind Stützmittel und Rahmenmittel ebenfalls aus einem Kunststoff gebildet. Darüber hinaus sind Ausführungsformen denkbar, bei denen Stützmittel und/oder Rahmenmittel aus einem Metall gebildet sind.

Ferner ist eine Ausführungsform der Sitzvorrichtung denkbar, bei denen die Kopfstütze ein gemeinsames, einstückiges Bauteil, insbesondere ein Kunststoffbauteil, insbesondere ein Mehrkomponenten-Spritzgussbauteil, umfasst. Solchenfalls können Abdeckmittel, Stützmittel und Rahmenmittel in einem einzigen Fertigungsprozess, beispielsweise als Kunststoff-Spritzgussteil, gebildet sein.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen der Sitzvorrichtung.

In der Zeichnung zeigt:
- Figur 1: Eine Vorderansicht auf ein erstes Ausführungsbeispiel der Sitzvorrichtung;
- Figur 2: Eine perspektivische Rückansicht auf die Sitzvorrichtung gemäß Figur 1;
- Figur 3: Eine perspektivische Rückansicht auf ein zweites Ausführungsbeispiel der Sitzvorrichtung.

Die Figuren zeigen zwei Ausführungsbeispiele einer jeweils mit dem Bezugszeichen 2 versehenen Sitzvorrichtung für ein Kraftfahrzeug. Die Sitzvorrichtung 2 umfasst jeweils eine Sitzrückenlehne 4, an der ein Benutzer mit seinem Rücken anliegend anordenbar ist. Darüber hinaus umfasst die Sitzvorrichtung 2 eine Kopfstütze 6, an der der Nutzer mit seinem Kopf an einer Kopfstützfläche 8 anliegend anordenbar ist. Die Kopfstütze 6 umfasst ein Stützmittel 10, das im Wesentlichen in einem mittigen Zentralbereich der Kopfstütze 6 angeordnet ist. Durch das Stützmittel 10 sind auf die Kopfstützfläche 8 wirkende Lasten aufnehmbar. Das Stützmittel 10 ist lastübertragend an oder in der Sitzrückenlehne 4 festgelegt.

Darüber hinaus umfasst die Sitzvorrichtung 2 ein lastaufnehmendes Rahmenmittel 12 der Kopfstütze 6, das in Gänze oder zumindest abschnittsweise einen äußeren Randbereich der Kopfstütze 6 bildet. Das Rahmenmittel 12 umgibt den mittigen Zentralbereich in Gänze. Durch das Rahmenmittel 12 sind auf die Kopfstützfläche 8 wirkende Lasten aufnehmbar. Das Rahmenmittel 12 ist lastübertragend an oder in der Sitzrückenlehne 4 festgelegt.

Zwischen Rahmenmittel 12 und Stützmittel 10 der Kopfstütze 6 ist ein quer oder schräg zur Kopfstützfläche 8 erstreckter, durchgehender, materialfreier Freiraum 14 angeordnet. Durch den materialfreien Freiraum 14 sind Stützmittel 10 und Rahmenmittel 12 parallel oder schräg zur Kopfstützfläche 8 verlaufenden Ebene berührungsfrei zueinander beabstandet.

Die Figuren zeigen Ausführungsbeispiele der Sitzvorrichtung 2, bei denen sowohl das Rahmenmittel 12 als auch das Stützmittel 10 in einer parallel oder schräg zur Kopfstützfläche 8 verlaufenden Ebene einen U-förmigen Querschnitt umfassen. Das Rahmenmittel 12 umgibt hierdurch das Stützmittel 10 seitlich und auf der der Sitzrückenlehne 4 abgewandten Seite. Das Rahmenmittel 12 erstreckt sich mit seinen beiden Enden in Richtung Sitzrückenlehne 4 und ist dort festgelegt.

Dieses gilt in gleicher Weise auch für das Stützmittel 10, das ebenfalls einen U-förmigen Querschnitt umfasst und in Richtung Sitzrückenlehne 4 geöffnet ist. Hierbei umgibt das Stützmittel 10 eine quer zur Kopfstützfläche 8 verlaufende, in mittigem Zentralbereich der Kopfstütze 6 angeordnete, durchgehende Ausnehmung 16. Auf der der Kopfstützfläche 8 zugewandten Seite umfasst das Stützmittel 10 eine flächenhafte Stützplatte 18, die an einem U-förmigen Querschnitt umfassenden Stützelement 20 des Stützmittels 10 festgelegt ist.

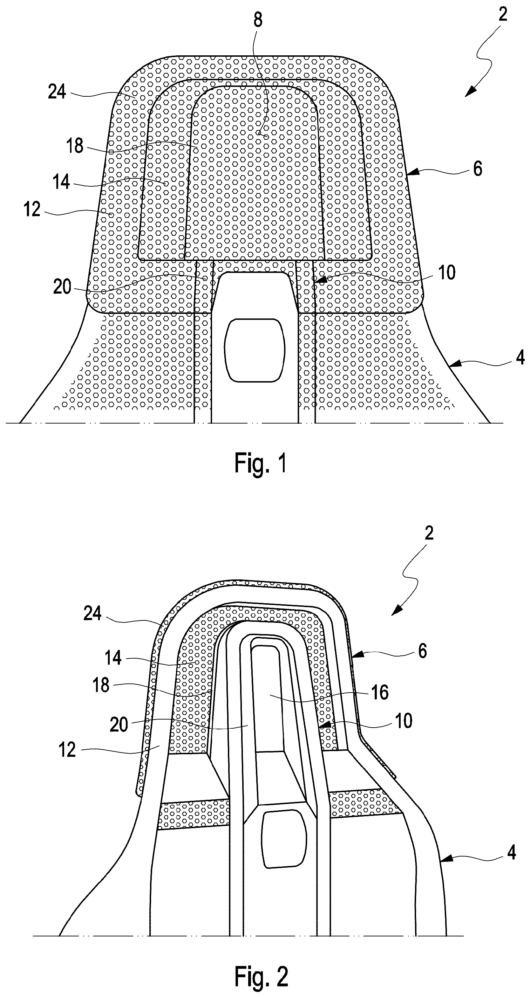

Die Figuren 1 und 2 zeigen ein erstes Ausführungsbeispiel der Sitzvorrichtung 2. Bei dieser ist der materialfreie Freiraum 14 derart gebildet, dass er einen einzigen materialfreien Freiraum 14 umfasst, der das Stützmittel 10 und das Rahmenmittel 12 in Gänze berührungsfrei voneinander beabstandet.

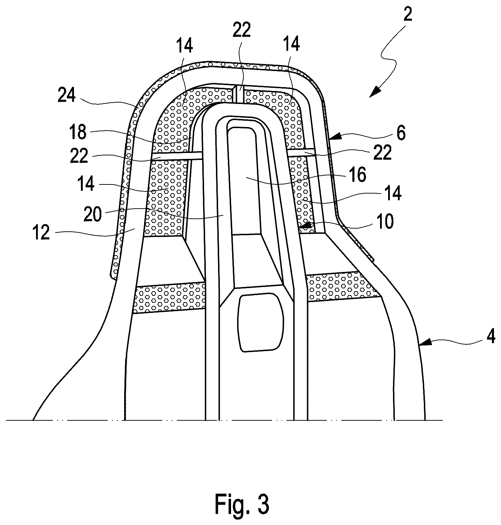

Bei dem in Figur 3 ersichtlichen zweiten Ausführungsbeispiel der Sitzvorrichtung 2, sind mehrere materialfreie Freiräume 14 vorgesehen, die jeweils durch Stegelemente 22 voneinander beabstandet sind. Die Stegelemente 22 erstrecken sich von dem Stützmittel 10 bis hin zum Rahmenmittel 12.

Beiden Ausführungsbeispielen ist gemein, dass dieser ein Abdeckmittel 24 umfasst, das auf der der Kopfstützfläche 8 zugewandten Seite am Stützmittel 10 und am Rahmenmittel 12 festgelegt ist. Das Abdeckmittel 24 bildet bei dem in den Figuren gezeigten Ausführungsbeispiel die Kopfstützfläche 8, so dass ein Benutzer beim Ablegen des Kopfes an der Kopfstütze 6 am Abdeckmittel 24 anliegt.

Das Abdeckmittel 24 ist mit einer offenen Oberflächenstruktur ausgebildet.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Sitzvorrichtung
- 4: Sitzrückenlehne
- 6: Kopfstütze
- 8: Kopfstützfläche
- 10: Stützmittel
- 12: Rahmenmittel
- 14: Freiraum
- 16: Ausnehmung
- 18: Stützplatte
- 20: Stützelement
- 22: Stegelement
- 24: Abdeckmittel

## Patentansprüche

1. Sitzvorrichtung (2) für ein Kraftfahrzeug mit einer Sitzrückenlehne (4), an der ein Benutzer mit seinem Rücken anliegend anordenbar ist und mit mindestens einer Kopfstütze (6), an der der Nutzer mit seinem Kopf an einer Kopfstützfläche (8) anliegend anordenbar ist, die mindestens ein Stützmittel (10), das im Wesentlichen in einem mittigen Zentralbereich der Kopfstütze (6) angeordnet ist, durch das auf die Kopfstützfläche (8) wirkende Lasten aufnehmbar sind und das lastübertragend an oder in der Sitzrückenlehne (4) festgelegt ist, die mindestens ein lastaufnehmendes Rahmenmittel (12), das in Gänze oder zumindest abschnittsweise einen äußeren Randbereich der Kopfstütze (6) bildet, das den mittigen Zentralbereich in Gänze oder abschnittsweise umgibt, durch das auf die Kopfstützfläche (8) wirkende Lasten aufnehmbar sind und das lastübertragend an oder in der Sitzrückenlehne (4) festgelegt ist, und die mindestens einen quer oder schräg zur Kopfstützfläche (8) erstreckten, durchgehenden, materialfreien Freiraum (14) umfasst, durch den Stützmittel (10) und Rahmenmittel (12) in einer parallel oder schräg zur Kopfstützfläche (8) verlaufenden Ebene berührungsfrei zueinander beabstandet sind.

2. Sitzvorrichtung (2) nach Anspruch 1, **dadurch gekennzeichnet, dass** das Rahmenmittel (12) in einer parallel oder schräg zur Kopfstützfläche (8) verlaufenden Ebene einen V- oder U-förmigen Querschnitt umfasst, der in Richtung Sitzrückenlehne (4) hin geöffnet ist und der das Stützmittel (10) seitlich und auf der der Sitzrückenlehne (4) abgewandten Seite umgibt, wobei das Rahmenmittel (12) mit den beiden freien Enden in Richtung Sitzrückenlehne (4) erstreckt an oder in der Sitzrückenlehne (4) festgelegt ist.

3. Sitzvorrichtung (2) nach Anspruch 1 oder 2, **dadurch gekennzeichnet, dass** der mindestens eine materialfreie Freiraum (14) einen einzigen materialfreien Freiraum (14) umfasst, der Stützmittel (10) und Rahmenmittel (12) in Gänze berührungsfrei voneinander beabstandet.

4. Sitzvorrichtung (2) nach Anspruch 1 oder 2, **dadurch gekennzeichnet, dass** der mindestens eine materialfreie Freiraum (14) mindestens zwei materialfreie Freiräume (14) umfasst, die jeweils Stützmittel (10) und Rahmenmittel (12) berührungsfrei voneinander beabstanden, und dass die Kopfstütze (6) mindestens ein Stegelement (22) umfasst, das zwischen Stützmittel (10) und Rahmenmittel (12) erstreckt ist, das an Stützmittel (10) und am Rahmenmittel (12) festgelegt ist und durch das zwei benachbarte Freiräume (14) voneinander getrennt beabstandet sind.

5. Sitzvorrichtung (2) nach einem der vorhergehenden Ansprüche, **dadurch gekennzeichnet, dass** das Stützmittel (10) mindestens ein Stützelement (20) umfasst, das in einer parallel oder schräg zur Kopfstützfläche (8) verlaufenden Ebene einen V- oder U-förmigen Querschnitt umfasst, der in Richtung Sitzrückenlehne (4) hin geöffnet ist und der mit den beiden freien Enden in Richtung Sitzrückenlehne (4) erstreckt an oder in der Sitzrückenlehne (4) festgelegt ist.

6. Sitzvorrichtung (2) nach Anspruch 5, **dadurch gekennzeichnet, dass** das Stützelement (20) des Stützmittels (10) eine quer zur Kopfstützfläche (8) verlaufende, im mittigen Zentralbereich der Kopfstütze (6) angeordnete, insbesondere durchgehende, Ausnehmung (16) umgibt.

7. Sitzvorrichtung (2) nach einem der Ansprüche 5 oder 6, **dadurch gekennzeichnet, dass** das Stützmittel (10) eine flächenhafte Stützplatte (18) umfasst, die auf der der Kopfstützfläche (8) zugewandten Seite des mindestens einen Stützelements (20) am mindestens einen Stützelement (20) festgelegt ist und dass die Ausnehmung (16) überdeckt und/oder das das mindestens eine Stützelement (20) in der parallel oder schräg zur Kopfstützfläche (8) verlaufenden Ebene seitlich, insbesondere in Richtung Rahmenmittel (12) überragt.

8. Sitzvorrichtung (2) nach einem der vorhergehenden Ansprüche, **dadurch gekennzeichnet, dass** die Kopfstütze (6) an der Sitzrückenlehne (4) starr und lösbar, insbesondere kraft- oder formschlüssig, oder starr und unlösbar, insbesondere kraft-, stoff- oder formschlüssig, festgelegt ist und/oder dass die Kopfstütze (6) an der Sitzrückenlehne (4) verstellbar und lösbar, insbesondere kraft- oder formschlüssig, festgelegt ist.

9. Sitzvorrichtung (2) nach einem der vorhergehenden Ansprüche, **gekennzeichnet, durch** mindestens ein Abdeckmittel (24), das zumindest auf einer der Kopfstützfläche (8) zugewandten Seite von Stützmittel (10) und Rahmenmittel (12) angeordnet und insbesondere an Stützmittel (10) und Rahmenmittel (12) berührend anliegend festgelegt ist, und das zumindest die Kopfstützfläche (8) der in Gänze oder zumindest abschnittweise überdeckt oder bildet.

10. Sitzvorrichtung (2) nach Anspruch 9, **dadurch gekennzeichnet, dass** das Abdeckmittel (24) eine geschlossene Oberfläche oder offene Oberflächenstruktur umfasst und/oder dass das Abdeckmittel (24) ein Gewebe, einen Kunststoff, Leder oder einen Netzstoff umfasst.
